# EUROPEAN PATENT APPLICATION

(11) **EP 4 787 676 A1**
(43) Date of publication of application: **05.08.2026**
(21) Application number: 24933172.9
(22) Date of filing: 27.08.2024
(51) Int. Cl.: H02K 5/16, H02K 5/24, H02K 7/14, H02K 9/06, H02K 5/04, A47L 9/22

(54) **MOTOR**

(71) Applicant: LG ELECTRONICS INC., Yeongdeungpo-gu Seoul 07336 (KR)
(72) Inventor: KANG, Joohang, Geumcheon-gu, Seoul 08592 (KR); KIM, Yongdae, Geumcheon-gu, Seoul 08592 (KR); HA, Hyeonho, Geumcheon-gu, Seoul 08592 (KR)
(74) Representative: Vossius & Partner Patentanwälte Rechtsanwälte mbB
(86) International application number: PCT/KR2024/012758
(87) International publication number: WO 2026/049077

(57) **Abstract**

Provided is a motor. According to one aspect of the present disclosure, a motor includes: a housing; a first bearing coupled to the housing; a rotational shaft rotatably coupled to the first bearing; a rotor coupled to the rotational shaft and placed below the first bearing; a stator assembly placed at a radial outer side of the rotor; an impeller coupled to the rotational shaft and placed below the rotor; a diffuser coupled to the housing and placed below the impeller; a second bearing coupled to a central region of the diffuser and rotatably coupled to the rotational shaft; a bearing holder placed between the first bearing and the housing; an elastic member placed between the bearing holder and the housing in an axial direction; and a support damper placed between the bearing holder and the housing in a direction perpendicular to the axial direction.

## Description

### [Technical Field]

The present disclosure relates to a motor, and more particularly, to a motor for a cleaner that performs cleaning by sucking or wiping off dust or foreign materials of a cleaning target region.

### [Background Art]

In general, a vacuum cleaner is a household appliance that sucks foreign materials such as dust and collects the sucked foreign materials in a separate collection unit installed inside a body.

Specifically, a high suction force is required for the vacuum cleaner to effectively suck the foreign materials, and an intensity of the suction force is proportional to a rotational force of a motor. That is, the higher the rotational force of the motor, the higher a rotational speed of a fan connected to the motor, thereby increasing a suction force applied to the foreign materials.

In general, a motor for a vacuum as a device that obtains rotational force from electrical energy includes a stator and a rotor. The rotor can be rotated by an electromagnetic interaction with the stator.

A conventional motor for a cleaner includes a rotational shaft that rotates with the rotor, an impeller coupled to the rotational shaft, a first housing that supports the stator, and a second housing that encloses the impeller.

In this case, the motor for the cleaner has a cantilever structure in which the stator is placed between a first bearing and a second bearing, and the impeller is placed below the second bearing, so that secondary press-fitting of a rotational shaft for securing a predetermined gap between the impeller and the second housing is impossible.

As a result, there is a problem in that interference occurs between the impeller and the second housing during high-speed rotation of the impeller.

### [Disclosure]

### [Technical Problem]

An object to be achieved by the present disclosure is to provide a motor capable of vertically moving a bearing and a rotational shaft in a state in which outward preloads are formed on both sides of a first bearing and a second bearing in an axial direction.

Further, an object to be achieved by the present disclosure is to provide a motor that may secure reliability because an accurate gap between a second housing and an impeller may be set.

In addition, an object to be achieved by the present disclosure is to provide a motor that maintains an alignment between bearings due to an arching effect of an elastic member in a state of maintaining a balance of a rotor, thereby increasing a service life of the bearing.

In addition, an object to be achieved by the present disclosure is to provide a motor that absorbs a vibration between a housing and the rotational shaft to prevent resonance and reduce noise generation.

Further, an object to be achieved by the present disclosure is to provide a motor that may prevent a support damper from being rotated by vibrations of the rotational shaft and the housing.

In addition, an object to be achieved by the present disclosure is to provide a motor that may prevent a bearing holder from being rotated by the vibrations of the rotational shaft and the housing.

### [Technical Solution]

In order to achieve the object, according to one aspect of the present disclosure, a motor may include: a housing; a first bearing coupled to the housing; a rotational shaft rotatably coupled to the first bearing; a rotor coupled to the rotational shaft and placed below the first bearing; a stator assembly placed at a radial outer side of the rotor; an impeller coupled to the rotational shaft and placed below the rotor; a diffuser coupled to the housing and placed below the impeller; a second bearing coupled to a central region of the diffuser and rotatably coupled to the rotational shaft; a bearing holder placed between the first bearing and the housing; and an elastic member placed between the bearing holder and the housing in an axial direction.

Accordingly, it is possible to vertically move a bearing and a rotational shaft in a state in which outward preloads are formed on both sides of a first bearing and a second bearing in an axial direction. Further, since an accurate gap between the second housing and the impeller may be set, reliability may be ensured. Moreover, by maintaining an alignment between bearings due to an arching effect of an elastic member in a state of maintaining a balance of a rotor, a service life of the bearing may be increased.

Further, the motor may further include a support damper placed between the bearing holder and the housing in a direction perpendicular to the axial direction.

Accordingly, vibration between the housing and the rotational shaft may be absorbed to prevent resonance, and noise generation of the motor 10 may be reduced.

In addition, when the support damper is viewed from an upper side of the rotational shaft, the support damper may be formed in a polygonal shape.

In this case, the housing may include a plurality of first grooves formed to be concave outward in a radial direction on an inner peripheral surface facing the first bearing and spaced apart from each other in a circumferential direction, and projection regions, which are projected outward in a radial direction of the support damper, may be placed at the plurality of first grooves.

Accordingly, it is possible to prevent the support damper from rotating by the vibration of the rotational shaft and the housing.

Further, the impeller may be located downstream of a flow path generated by rotation of the impeller.

In addition, an inner ring of the first bearing may be coupled to the rotational shaft, and an outer ring of the first bearing may be supported by the bearing holder.

Further, the bearing holder may include a first horizontal portion that supports a lower surface of the outer ring of the first bearing, a first vertical portion that extends upward in an axial direction in a radial outer region of the first horizontal portion, and is in contact with an outer surface of the outer ring of the first bearing, a second horizontal portion that extends outward in a radial direction in an upper region of the first vertical portion, and a second vertical portion that extends downward in an axial direction in a radial outer side of the second horizontal portion.

In this case, the housing may include a support portion that extends inward in a radial direction in a lower region of the inner surface facing the first bearing, and a step portion that is formed between the support portion and the inner peripheral surface, and an upper surface of the elastic member may be in contact with a lower surface of the second horizontal portion and a lower surface of the elastic member may be in contact with an upper surface of the support portion.

Further, an outer peripheral surface of the support damper may be in contact with an inner peripheral surface of the housing, and a lower surface of the support damper may be in contact with an upper surface of the step portion.

Further, the support damper may be injected integrally with the bearing holder.

Further, the bearing holder may include a second groove that is formed to be concave inward in a radial direction on an outer surface and extends in a circumferential direction, and at least a portion of the support damper may be placed at the second groove.

In addition, an inner ring of the second bearing may be coupled to the rotational shaft and an upper surface of the second bearing may be supported by the diffuser.

In addition, when the bearing holder is viewed from an upper side of the rotational shaft, the bearing holder may be formed in a polygonal shape.

Accordingly, it is possible to prevent the bearing holder from rotating by the vibration of the rotational shaft and the housing.

Further, the housing may include a plurality of first grooves formed to be concave outward in a radial direction on an inner peripheral surface facing the first bearing and spaced apart from each other in a circumferential direction, and projection regions, which are projected outward in a radial direction of the bearing holder, may be placed at the plurality of first grooves.

Further, the bearing holder may include a second groove that is formed to be concave inward in a radial direction on an outer surface and extends in a circumferential direction, and a support damper may be placed between the second groove and the housing.

Further, the bearing holder may include a plurality of anti-rotation protrusions that extend outward in a radial direction on an outer peripheral surface and are spaced in a circumferential direction.

In addition, the housing may include a plurality of first grooves formed to be concave outward in a radial direction on an inner peripheral surface facing the first bearing and spaced apart from each other in a circumferential direction, and the plurality of anti-prevention protrusions may be placed at the plurality of first grooves.

Further, radial outer regions of the plurality of anti-rotation protrusions may be placed in a rotational direction of the rotational shaft compared to radial inner regions.

In addition, an upper region of an outer peripheral surface of the bearing holder may have a diameter which decreases toward an upper side in the axial direction.

### [Advantageous Effects]

According to the present disclosure, a motor can be provided, which can vertically move a bearing and a rotational shaft in a state in which outward preloads are formed on both sides of a first bearing and a second bearing in an axial direction.

Further, according to the present disclosure, a motor can be provided, which secures reliability because an accurate gap between a second housing and an impeller may be set.

In addition, according to the present disclosure, a motor can be provided, which maintains an alignment between bearings due to a wrap effect of an elastic member in a state of maintaining a balance of a rotor, thereby increasing a duration life of the bearing.

In addition, according to the present disclosure, a motor can be provided, which absorbs a vibration between a housing and the rotational shaft to prevent resonance and reduce noise generation.

Further, according to the present disclosure, a motor can be provided, which can prevent a support damper from being rotated by vibrations of the rotational shaft and the housing.

In addition, according to the present disclosure, a motor can be provided, which can prevent a bearing holder from being rotated by the vibrations of the rotational shaft and the housing.

### [Description of Drawings]

FIG. 1 is a perspective view of a motor according to a first embodiment of the present disclosure.
FIG. 2 is an exploded perspective view of the motor according to the first embodiment of the present disclosure.
FIG. 3 is a cross-sectional view of the motor according to the first embodiment of the present disclosure.
FIG. 4 is an enlarged diagram of part A in FIG. 3.
FIG. 5 is a perspective view of an upper region of the motor according to the first embodiment of the present disclosure.
FIG. 6 is a diagram in which a first housing is removed from FIG. 5.
FIG. 7 is a perspective view of an upper region of a motor according to a second embodiment of the present disclosure.
FIG. 8 is a diagram in which a first housing is removed from FIG. 7.
FIG. 9 is a cross-sectional view of the upper region of the motor according to the second embodiment of the present disclosure.
FIG. 10 is a perspective view of an upper region of a motor according to a third second embodiment of the present disclosure.
FIG. 11 is a diagram in which a first housing is removed from FIG. 10.
FIG. 12 is a perspective view of an upper region of a motor according to a fourth embodiment of the present disclosure.
FIG. 13 is a diagram in which a first housing is removed from FIG. 12.
FIG. 14 is a cross-sectional view of an upper region of a motor according to a fifth embodiment of the present disclosure.
FIG. 15 is a perspective view of the upper region of the motor according to the fifth embodiment of the present disclosure.
FIG. 16 is a diagram in which a first housing is removed from FIG. 15.

### [Mode for Invention]

Hereinafter, some embodiments of the present disclosure will be described in detail with reference to exemplary drawings. It should be noted that, when components in each drawing are denoted by reference numerals, the same components are denoted by the same numerals as much as possible even if they are displayed in different drawings. Further, in describing the embodiments of the present disclosure, a detailed description of a related known configuration or function is omitted when it is determined that the detailed description interferes with an understanding of the embodiment of the present disclosure.

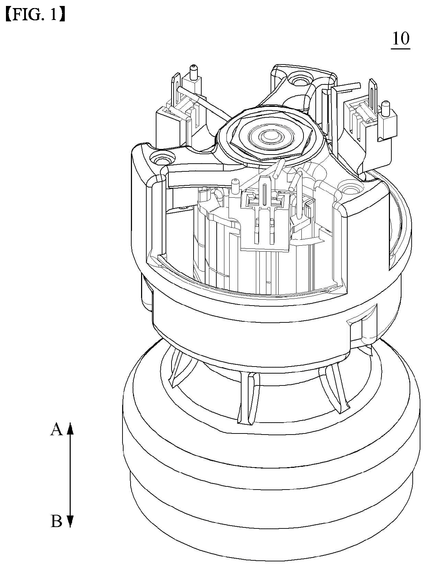

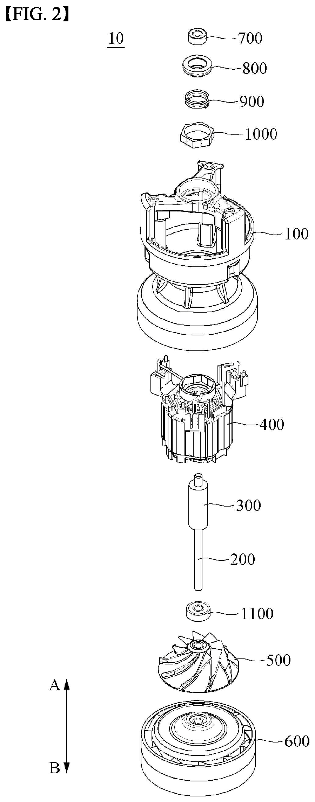

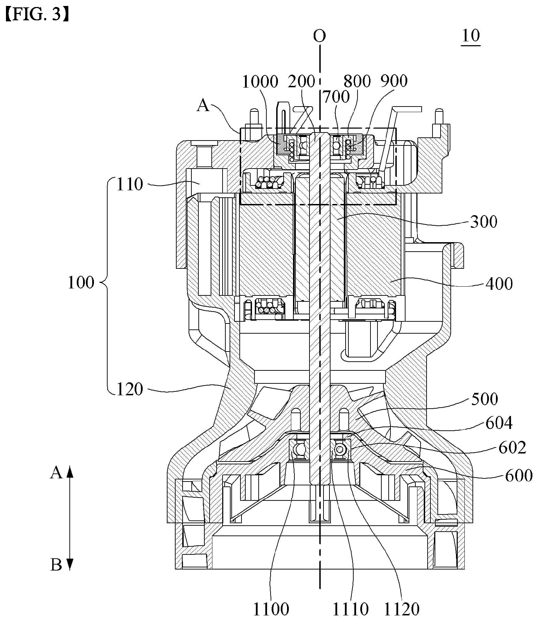

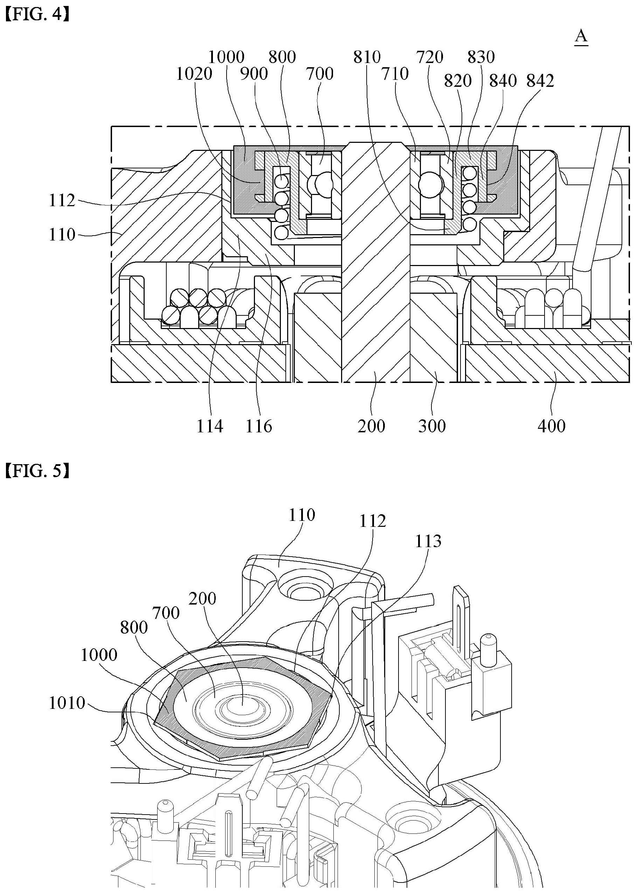

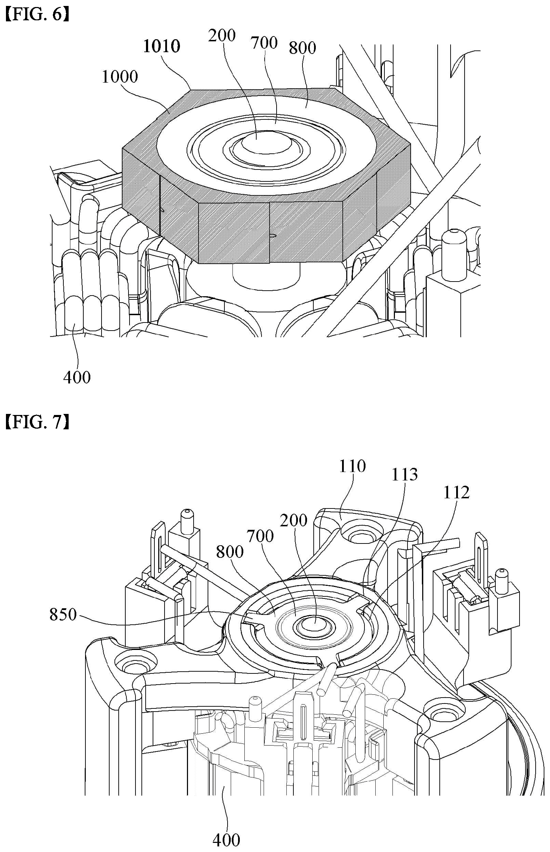

FIG. 1 is a perspective view of a motor according to a first embodiment of the present disclosure. FIG. 2 is an exploded perspective view of the motor according to the first embodiment of the present disclosure. FIG. 3 is a cross-sectional view of the motor according to the first embodiment of the present disclosure. FIG. 4 is an enlarged diagram of part A in FIG. 3. FIG. 5 is a perspective view of an upper region of the motor according to the first embodiment of the present disclosure. FIG. 6 is a diagram in which a first housing is removed from FIG. 5.

Referring to FIGS. 1 to 6, a motor 10 according to a first embodiment of the present disclosure may include a housing 100, a rotational shaft 200, a rotor 300, a stator assembly 400, an impeller 500, a diffuser 600, a first bearing 700, a bearing holder 800, an elastic member 900, a support damper 1000, and a second bearing 1100. However, some of these components may be excluded, and other additional components are not excluded.

The motor 10 may be a suction motor used in a cleaner. The motor 10 may generate a suction force to cause external dust to flow into the cleaner. Detailed components of the motor 10 may be placed to form a reverse flow path with respect to the rotational shaft 200. Specifically, the impeller 500 may be placed downstream of a flow path generated according to rotation of the impeller 500 coupled to the rotation shaft 200. In other words, air outside the motor 10 is sucked into the motor 10 according to the rotation of the impeller 500, and a flow path through which air flows inside the motor 10 may be formed while sequentially passing through the first housing 110, the stator assembly 400, the impeller 500, and the diffuser 600. As a result, a heat dissipation effect on heat generated due to an electromagnetic interaction between the rotor 300 and the stator assembly 400 may be enhanced compared to a motor placed in a forward flow path.

The housing 100 may include a first housing 110 and a second housing 120. In an embodiment of the present disclosure, it is described as an example that the first housing 110 and the second housing 120 are separately coupled, but the present disclosure is not limited thereto, and the first housing 110 may be integrally formed with the second housing 120.

The first housing 110 may include a bearing housing in which the bearing holder 800 is placed, and a plurality of leg portions extending axially downward in a radial outer region of the bearing housing. The plurality of leg portions may be spaced apart from each other in a circumferential direction. The leg portion of the first housing 110 may be coupled to the second housing 120.

The first housing 110 may include a first support portion 116 extending radially inward in a lower region of the inner peripheral surface 112 facing the first bearing 700, and a step portion 114 formed between the first support portion 116 and the inner peripheral surface 112.

The first housing 110 may include a plurality of first grooves 113 that are formed to be concave in the radial direction on the inner peripheral surface 112 facing the first bearing 700 and are spaced apart from each other in the circumferential direction. A projection region 1010 of the support damper 1000 may be placed at each of the plurality of first grooves 113. The first groove 113 may be formed in a shape corresponding to a shape of the projection region 1010 of the support damper 1000.

In an embodiment of the present disclosure, an upper portion or above in the axial direction O refers to direction "A" with reference to FIG. 3, and a lower portion or below in the axial direction O refers to direction "B" with reference to FIG. 3.

The second housing 120 may be coupled to the first housing 110. The second housing 120 may enclose the impeller 500. The second housing 102 may be formed in a mortar shape. The second housing 120 may include a lower region that encloses the impeller 500 and has an inner diameter that decreases upward axially, and an upper region that is coupled to the first housing 110.

The rotational shaft 200 may be rotatably coupled to the first housing 110. The rotational shaft 200 may be rotatably coupled to the first housing 110 through the first bearing 700. The rotational shaft 200 may extend in a vertical direction. The rotational shaft 200 may be formed in a cylindrical shape. The rotational shaft 200 may rotate in one direction or the other direction by rotation of the rotor 300. The rotational shaft 200 may be rotatably coupled to the diffuser 600. The rotational shaft 200 may be rotatably coupled to the diffuser 600 through the second bearing 1100.

The rotor 300 may be coupled to the rotational shaft 200. The rotor 300 may be placed below the first bearing 700. The rotor 300 may be placed radially inward of the stator assembly 400. The rotor 300 may face the stator assembly 400. The rotor 300 may rotate in one direction or the other direction by the electromagnetic interaction with the stator assembly 400.

The stator assembly 400 may be coupled to the housing 100. The stator assembly 400 may be coupled to the first housing 110 and/or the second housing 120. The stator assembly 400 may be placed in an internal space created by the first housing 110 and the second housing 120. The stator assembly 400 may be placed radially outward of the rotor 300. The stator assembly 400 may include a stator core facing the rotor 300, a coil wound around the stator core, and an insulator surrounding the stator core and formed of an insulating material.

The impeller 500 may be coupled to the rotational shaft 200. The impeller 500 may rotate in one direction or the other direction according to rotation of the rotational shaft 200. The impeller 500 may be placed below the rotor 300. The impeller 500 may be placed between the stator assembly 400 and the second bearing 1100. The impeller 500 may have a smaller diameter toward an upper portion in the axial direction. The impeller 500 may be formed in a centrally opened conical shape as a whole. A plurality of impeller blades projected outward in the radial direction and spaced apart from each other in the circumferential direction may be formed on a radial outer surface of the impeller 500.

The diffuser 600 may be coupled to the second housing 120. The diffuser 600 may be placed below the impeller 500. The rotational shaft 200 may be rotatably coupled to the diffuser 600.

The first bearing 700 may be coupled to the first housing 110. The first bearing 700 may be coupled to a bearing holder 800 that is coupled to a central region of a bearing housing of the first housing 110. The first bearing 700 may rotatably couple the rotational shaft 200 to the first housing 110.

An inner ring 710 of the first bearing 700 may be coupled to an outer peripheral surface of the rotational shaft 200. An outer ring 720 of the first bearing 700 may be supported by the first housing 110 through the bearing holder 800. The outer ring 720 of the first bearing 700 may be supported by the bearing holder 800. An outer peripheral surface of the outer ring 720 of the first bearing 700 may be supported by an inner peripheral surface of the bearing holder 800, and a lower surface of the outer ring 720 of the first bearing 700 may be in contact with an upper surface of a first horizontal portion 810 of the bearing holder 800.

The bearing holder 800 may be placed between the first bearing 700 and the first housing 110 in a direction perpendicular to the axial direction O or in a horizontal direction.

The bearing holder 800 may include a first horizontal portion 810 that supports a lower surface of the outer ring 720 of the first bearing 700, a first vertical portion 820 that extends upward in the axial direction O in a radial outer region of the first horizontal portion 810 and is in contact with an outer peripheral surface of the outer ring 720 of the first bearing 700, a second horizontal portion 830 that extends radially outward in an axial (O) upper region of the first vertical portion 820, and a second vertical portion 840 that extends downward in the axial direction O in a radial (O) outer side of the second horizontal portion 830.

The elastic member 900 may be placed between a lower surface of the second horizontal portion 830 and an upper surface of the first support portion 116 extending radially inward on a lower portion of the inner peripheral surface 112 of the first housing 110. An outer surface of the second vertical portion 840 may face the inner peripheral surface 112 of the first housing 112.

The bearing holder 800 may include a second groove 842 that is formed to be concave inward in a radial direction on an outer surface and extends in a circumferential direction. At least a portion 1020 of the support damper 1000 may be placed at the second groove 842.

The elastic member 900 may be placed between the bearing holder 800 and the first housing 110 in the axial direction O. The elastic member 900 may be formed of a material having elasticity. The elastic member 900 may be a coil spring. The elastic member 900 may extend in the circumferential direction. An upper surface of the elastic member 900 may be supported by a lower surface of the second horizontal portion 830 of the bearing holder 800, and a lower surface of the elastic member 900 may be supported by an upper surface of the first support portion 116 of the first housing 110. In other words, the upper surface of the elastic member 900 may be in contact with the lower surface of the second horizontal portion 830, and the lower surface of the elastic member 900 may be in contact with the upper surface of the first support portion 116.

Through the bearing holder 800 and the elastic member 900, it is possible to vertically move the first bearing 700, the rotational shaft 200, and the second bearing 1100 in a state in which an outward preload is formed on the first bearing 700 and the second bearing 100 outward in the axial direction. Accordingly, since an accurate gap between the second housing 120 and the impeller 500 may be set, reliability may be ensured.

Since the elastic member 900 extends in the circumferential direction, the first bearing 700 and the rotational shaft 200 are located at a center in the radial direction with respect to the first housing 110. That is, in a state in which a balance of the rotor 300 is maintained, an alignment between the first bearing 700, and the second bearing 1100 is maintained due to an arching effect of the elastic member 900, and thus service lives of the bearings 700 and 1100 increase.

The support damper 1000 may be placed between the bearing holder 800 and the first housing 110 in the direction perpendicular to the axial direction O or in the horizontal direction. The support damper 1000 may be formed of the material having elasticity and implemented in a specific shape. Accordingly, vibration between the housing 100 and the rotational shaft 200 may be absorbed to prevent resonance, and noise generation of the motor 10 may be reduced.

An outer peripheral surface of the support damper 1000 may be in contact with the inner peripheral surface 112 of the first housing 110, and a lower surface of the support damper 1000 may be in contact with an upper surface of the step portion 114 of the first housing 100.

When the support damper 1000 is viewed from the top, when the support damper 1000 is viewed in the axial direction, or when the support damper 1000 is viewed from an upper side of the rotational shaft 200, the support damper 1000 may be formed in a polygonal shape. In other words, a transverse cross section of the support damper 1000 may be formed in the polygonal shape. In a first embodiment of the present disclosure, it is described as an example that the support damper 1000 is formed in a hexagonal column shape, but the present disclosure is not limited thereto and a shape of the support damper 1000 may be variously changed.

The support damper 1000 may include a projection region 1010 that is projected radially outward. The projection region 1010 of the support damper 1000 may be formed at the first groove 113 of the first housing 110. As a result, it is possible to prevent the support damper 1000 from rotating or slipping due to the vibration of the rotational shaft 200 and the housing 100. Here, the projection region 1010 of the support damper 1000 may be interpreted as meaning a vertex region on the transverse cross section of the support damper 1000.

The support damper 1000 may be manufactured separately from and coupled to the bearing holder 800, but the support damper 1000 may be injected integrally with the bearing holder 800. In this case, an upper region of the support damper 1000 may cover an upper surface of the bearing holder 800 and an upper surface of the first bearing 700. At least a portion 1020 of the support damper 1000 may be placed at the second groove 842 of the bearing holder 800.

The second bearing 1100 may be coupled to a central region of the diffuser 600. The rotational shaft 200 may be rotatably coupled to the second bearing 1100. The second bearing 1100 may rotatably couple the rotational shaft 200 to the diffuser 600.

An inner ring 1110 of the second bearing 1100 may be coupled to an outer peripheral surface of the rotational shaft 200. An upper surface of the outer ring 1120 of the second bearing 1100 may be supported by the diffuser 600. Specifically, the outer ring 1120 of the second bearing 1100 may be coupled to an inner peripheral surface 602 of the diffuser 600, and the upper surface of the outer ring 1120 of the second bearing 1100 may be in contact with a lower surface of the second support portion 604 that extends radially inward in an upper region of the inner peripheral surface 602 of the diffuser 600.

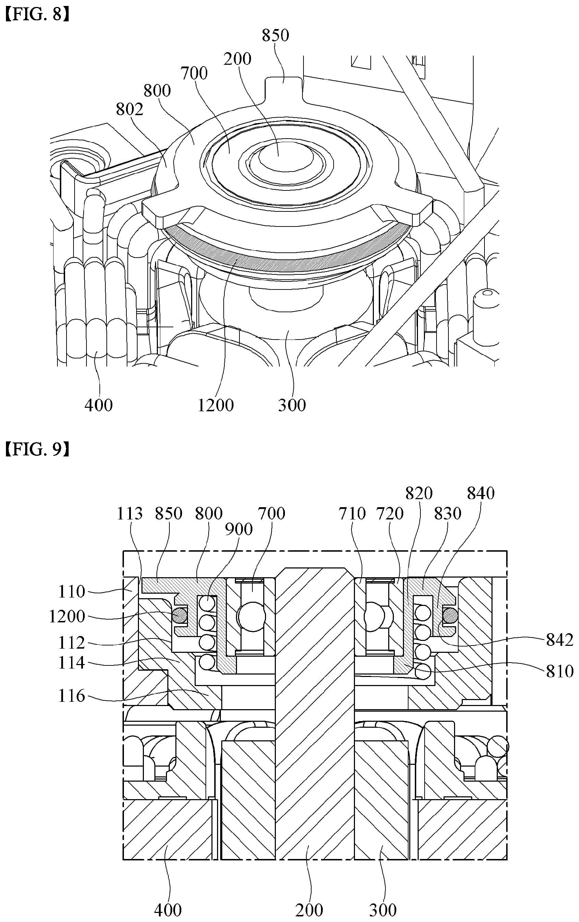

FIG. 7 is a perspective view of an upper region of a motor according to a second embodiment of the present disclosure. FIG. 8 is a diagram in which a first housing is removed from FIG. 7. FIG. 9 is a cross-sectional view of the upper region of the motor according to the second embodiment of the present disclosure.

Referring to FIGS. 7 to 9, a motor 10 according to a second embodiment of the present disclosure may include a housing 100, a rotational shaft 200, a rotor 300, a stator assembly 400, an impeller 500, a diffuser 600, a first bearing 700, a bearing holder 800, an elastic member 900, a support damper 1200, and a second bearing 1100. However, except for some of the components, the present disclosure may be executed, and other additional components are not excluded.

Hereinafter, a detailed configuration of the motor 10 according to the second embodiment, which will not be described, may be understood to be the same as that of the motor 10 of the first embodiment of the present disclosure.

The first housing 110 may include a plurality of first grooves 113 that are formed to be concave in the radial direction on the inner peripheral surface 112 facing the first bearing 700 and are spaced apart from each other in the circumferential direction.

The bearing holder 800 may include a plurality of anti-rotation protrusions 850 that extend radially outward on an outer peripheral surface and are spaced apart from each other in the circumferential direction. Specifically, the anti-rotation protrusion 850 may extend radially outward in an upper region 802 of the outer peripheral surface of the bearing holder 800. In the second embodiment of the present disclosure, it is described as an example that the number of plurality of anti-prevention protrusions 850 is three, but is not limited thereto, and may be variously changed.

The anti-rotation protrusion 850 may be placed at the first groove 113 of the first housing 110. The anti-rotation protrusion 850 may be formed in a shape corresponding to a shape of the first groove 113.

The upper region 802 of the outer peripheral surface of the bearing holder 800 may have a diameter which decreases toward an axial upper side. The bearing holder 800 may include a second groove 842 that is formed to be concave radially inward on the outer surface and extends in the circumferential direction. The support damper 1200 may be placed at the second groove 842.

The support damper 1200 may be placed between the bearing holder 800 and the first housing 110. Specifically, the support damper 1200 may be placed between the second groove 842 of the bearing holder 800, and the first housing 110. The support damper 1200 may be formed of the material having the elasticity. The support damper 1200 may be formed in the circular band or ring shape. The support damper 1200 may extend in the circumferential direction. Accordingly, vibration between the housing 100 and the rotational shaft 200 may be absorbed to prevent resonance, and noise generation of the motor 10 may be reduced.

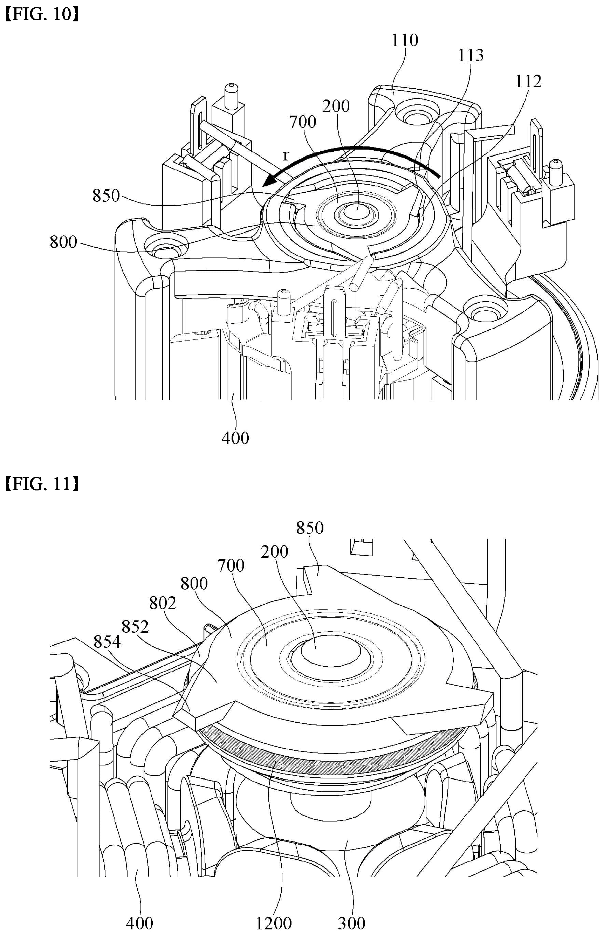

FIG. 10 is a perspective view of an upper region of a motor according to a third second embodiment of the present disclosure. FIG. 11 is a diagram in which a first housing is removed from FIG. 10.

Referring to FIGS. 10 and 11, a motor 10 according to a third embodiment of the present disclosure may include a housing 100, a rotational shaft 200, a rotor 300, a stator assembly 400, an impeller 500, a diffuser 600, a first bearing 700, a bearing holder 800, an elastic member 900, a support damper 1200, and a second bearing 1100. However, except for some of the components, the present disclosure may be executed, and other additional components are not excluded.

Hereinafter, a detailed configuration of the motor 10 according to the third embodiment, which will not be described, may be understood to be the same as that of the motor 10 of the second embodiment of the present disclosure.

A radial outer region 854 of the anti-rotation protrusion 850 may be placed in a rotational direction of a rotational shaft O compared to a radial inner region 852. In other words, when the rotational shaft 200 rotates in a counterclockwise direction, a radial outer region 854 of the anti-rotation protrusion 850 may be placed in the counterclockwise direction compared to a radial inner region 852. Accordingly, a contact area between the anti-prevention protrusion 850 and the first housing 110 is increased, thereby enhancing a durability of the anti-rotation protrusion 850.

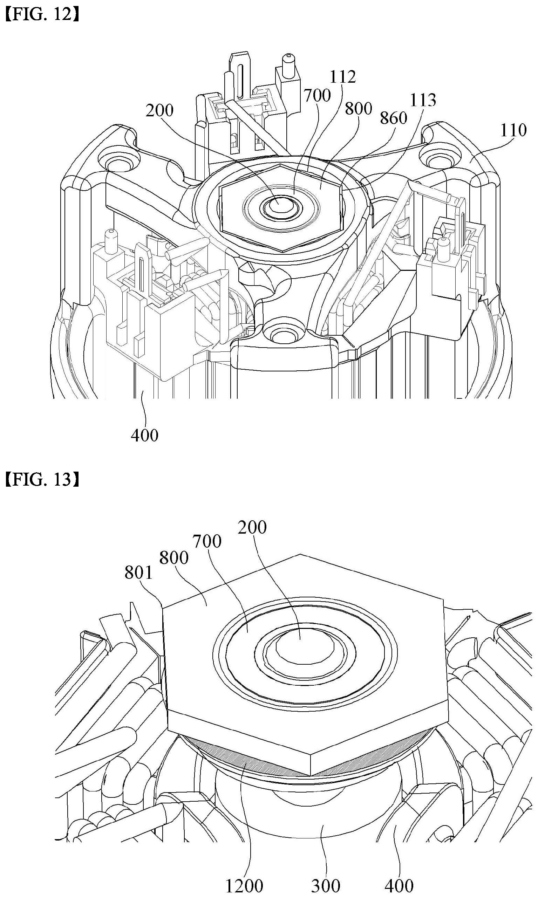

FIG. 12 is a perspective view of an upper region of a motor according to a fourth embodiment of the present disclosure. FIG. 13 is a diagram in which a first housing is removed from FIG. 12.

Referring to FIGS. 12 and 13, a motor 10 according to a fourth embodiment of the present disclosure may include a housing 100, a rotational shaft 200, a rotor 300, a stator assembly 400, an impeller 500, a diffuser 600, a first bearing 700, a bearing holder 800, an elastic member 900, a support damper 1200, and a second bearing 1100. However, except for some of the components, the present disclosure may be executed, and other additional components are not excluded.

Hereinafter, a detailed configuration of the motor 10 according to the fourth embodiment, which will not be described, may be understood to be the same as that of the motor 10 of the second embodiment of the present disclosure.

When the bearing holder 800 is viewed from the top, the bearing holder 800 may be formed in the polygonal shape. In other words, the transverse cross section of the support damper 800 may be formed in the polygonal shape. In the fourth embodiment of the present disclosure, it is described as an example that an upper region of the bearing holder 800 is formed in the hexagonal column shape, but the present disclosure is not limited thereto and a shape of the bearing holder 800 may be variously changed. A vertex region 801 of the bearing holder 800 may be placed at the first groove 113 of the first housing 110. As a result, it is possible to prevent the bearing holder 800 from rotating or slipping due to the vibration of the rotational shaft 200 and the housing 100.

The support damper 1200 may be placed at the second groove 842 of the bearing holder 800 that is concave radially inward below the upper region having the polygonal shape of the bearing holder 800.

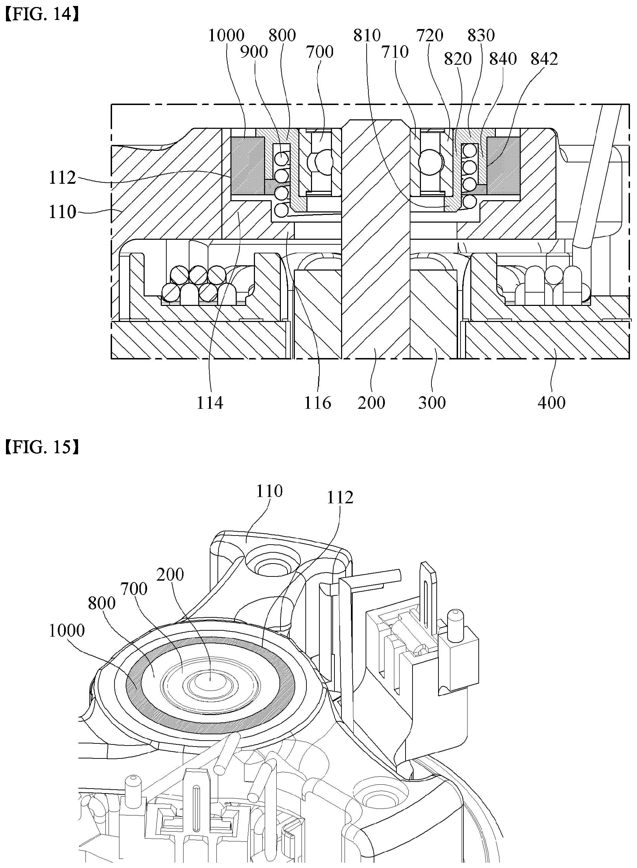

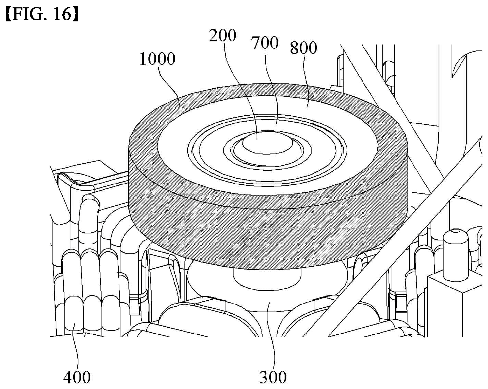

FIG. 14 is a cross-sectional view of an upper region of a motor according to a fifth embodiment of the present disclosure. FIG. 15 is a perspective view of the upper region of the motor according to the fifth embodiment of the present disclosure. FIG. 16 is a diagram in which a first housing is removed from FIG. 15.

Referring to FIGS. 14 to 16, a motor 10 according to a fifth embodiment of the present disclosure may include a housing 100, a rotational shaft 200, a rotor 300, a stator assembly 400, an impeller 500, a diffuser 600, a first bearing 700, a bearing holder 800, an elastic member 900, a support damper 1000, and a second bearing 1100. However, except for some of the components, the present disclosure may be executed, and other additional components are not excluded.

Hereinafter, a detailed configuration of the motor 10 according to the fifth embodiment, which will not be described, may be understood to be the same as that of the motor 10 of the first embodiment of the present disclosure.

The support damper 1000 may be placed between the bearing holder 800 and the first housing 110 in the direction perpendicular to the axial direction O or in the horizontal direction. The support damper 1000 may be formed of the material having the elasticity. Accordingly, vibration between the housing 100 and the rotational shaft 200 may be absorbed to prevent resonance, and noise generation of the motor 10 may be reduced.

The outer peripheral surface of the support damper 1000 may be in contact with the inner peripheral surface 112 of the first housing 110, and the lower surface of the support damper 1000 may be in contact with the upper surface of the step portion 114 of the first housing 100.

The support damper 1000 may be formed in a cylindrical shape as a whole. When the support damper 1000 is viewed from the top, the support damper may be formed in the circular band or ring shape.

The support damper 1000 may be manufactured separately from and coupled to the bearing holder 800, but the support damper 1000 may be injected integrally with the bearing holder 800.

While the embodiments of the present disclosure have been described above with reference to the accompanying drawings, it will be understood by those skilled in the art that the present disclosure may be embodied in other specific forms without departing from the spirit or essential characteristics thereof. Therefore, it should be understood that the embodiments described above are illustrative and non-restrictive in every aspect.

## Claims

1. A motor comprising:
a housing;
a first bearing coupled to the housing;
a rotational shaft rotatably coupled to the first bearing;
a rotor coupled to the rotational shaft and placed below the first bearing;
a stator assembly placed at a radial outer side of the rotor;
an impeller coupled to the rotational shaft and placed below the rotor;
a diffuser coupled to the housing and placed below the impeller;
a second bearing coupled to a central region of the diffuser and rotatably coupled to the rotational shaft;
a bearing holder placed between the first bearing and the housing;
an elastic member placed between the bearing holder and the housing in an axial direction; and
a support damper placed between the bearing holder and the housing in a direction perpendicular to the axial direction,
wherein when the support damper is viewed from an upper side of the rotational shaft, the support damper is formed in a polygonal shape.

2. The motor of claim 1, wherein the housing includes a plurality of first grooves formed to be concave outward in a radial direction on an inner peripheral surface facing the first bearing and spaced apart from each other in a circumferential direction, and
wherein projection regions, which are projected outward in a radial direction of the support damper, are placed at the plurality of first grooves.

3. The motor of claim 1, wherein the impeller is located downstream of a flow path generated by rotation of the impeller.

4. The motor of claim 1, wherein an inner ring of the first bearing is coupled to the rotational shaft, and
wherein an outer ring of the first bearing is supported by the bearing holder.

5. The motor of claim 4, wherein the bearing holder includes a first horizontal portion that supports a lower surface of the outer ring of the first bearing, a first vertical portion that extends upward in an axial direction in a radial outer region of the first horizontal portion, and is in contact with an outer surface of the outer ring of the first bearing, a second horizontal portion that extends outward in a radial direction in an upper region of the first vertical portion, and a second vertical portion that extends downward in an axial direction in a radial outer side of the second horizontal portion.

6. The motor of claim 5, wherein the housing includes a support portion that extends inward in a radial direction in a lower region of the inner surface facing the first bearing, and a step portion that is formed between the support portion and the inner peripheral surface, and
wherein an upper surface of the elastic member is in contact with a lower surface of the second horizontal portion and a lower surface of the elastic member is in contact with an upper surface of the support portion.

7. The motor of claim 6, wherein an outer peripheral surface of the support member is in contact with an inner peripheral surface of the housing, and a lower surface of the support member is in contact with an upper surface of the step portion.

8. The motor of claim 1, wherein the support damper is injected integrally with the bearing holder.

9. The motor of claim 1, wherein the bearing holder includes a second groove that is formed to be concave inward in a radial direction on an outer surface and extends in a circumferential direction, and
wherein at least a portion of the support damper is placed at the second groove.

10. The motor of claim 1, wherein an inner ring of the second bearing is coupled to the rotational shaft and an upper surface of the second bearing is supported by the diffuser.

11. A motor comprising:
a housing;
a first bearing coupled to the housing;
a rotational shaft rotatably coupled to the first bearing;
a rotor coupled to the rotational shaft and placed below the first bearing;
a stator assembly placed at a radial outer side of the rotor;
an impeller coupled to the rotational shaft and placed below the rotor;
a diffuser coupled to the housing and placed below the impeller;
a second bearing coupled to a central region of the diffuser and rotatably coupled to the rotational shaft;
a bearing holder placed between the first bearing and the housing; and
an elastic member placed between the bearing holder and the housing in an axial direction,
wherein the bearing holder includes a plurality of anti-rotation protrusions that extend outward in a radial direction on an outer peripheral surface and are spaced in a circumferential direction.

12. The motor of claim 11, wherein the bearing holder includes a first groove that is formed to be concave inward in a radial direction on an outer surface and extends in a circumferential direction, and
wherein a support damper is placed between the first groove and the housing.

13. The motor of claim 11, wherein the housing includes a plurality of second grooves formed to be concave outward in a radial outer side on an inner peripheral surface facing the first bearing and spaced apart in the circumferential direction, and
wherein the anti-rotation protrusion is placed at the second groove.

14. The motor of claim 11, wherein radial outer regions of the plurality of anti-rotation protrusions are placed in a rotational direction of the rotational shaft compared to radial inner regions.

15. The motor of claim 11, wherein the impeller is located downstream of a flow path generated by rotation of the impeller.

16. The motor of claim 11, wherein an upper region of an outer peripheral surface of the bearing holder has a diameter which decreases toward an upper side in the axial direction.

17. A motor comprising:
a housing;
a first bearing coupled to the housing;
a rotational shaft rotatably coupled to the first bearing;
a rotor coupled to the rotational shaft and placed below the first bearing;
a stator assembly placed at a radial outer side of the rotor;
an impeller coupled to the rotational shaft and placed below the rotor;
a diffuser coupled to the housing and placed below the impeller;
a second bearing coupled to a central region of the diffuser and rotatably coupled to the rotational shaft;
a bearing holder placed between the first bearing and the housing; and
an elastic member placed between the bearing holder and the housing in an axial direction,
wherein when the bearing holder is viewed from an upper side of the rotational shaft, the bearing holder is formed in a polygonal shape.

18. The motor of claim 17, wherein the housing includes a plurality of grooves formed to be concave outward in a radial direction on an inner peripheral surface facing the first bearing and spaced apart in a circumferential direction, and
wherein projection regions, which are projected outward in a radial direction of the bearing, are placed at the plurality of grooves.
